# FASCICULE DE BREVET EUROPEEN

(11) **EP 3 797 653 B1**
(45) Date de publication et mention de la délivrance du brevet: **27.07.2022**
(21) Numéro de dépôt: 20199036.3
(22) Date de dépôt: 29.09.2020
(51) Int. Cl.: A47J 27/09

(54) **AUTOCUISEUR POURVU D'UN DISPOSITIF DE SECURITÉ À CHAMBRE INTERMÉDIAIRE**
SCHNELLKOCHTOPF, DER MIT EINER SICHERHEITSVORRICHTUNG MIT ZWISCHENKAMMER AUSGESTATTET IST
PRESSURE COOKER EQUIPPED WITH A SAFETY DEVICE WITH INTERMEDIATE CHAMBER

(30) Priorité: 30.09.2019 FR 1910830
(43) Date de publication de la demande: 31.03.2021
(73) Titulaire: SEB S.A., 69130 Ecully (FR)
(72) Inventeur: SEURAT GUIOCHET, Claire, 21490 BRETIGNY (FR); CARTIGNY, Michel, Pierre, 21310 MIREBEAU-SUR-BEZE (FR)
(74) Mandataire: Weber, Jean-François

(56) Documents cités:
- EP-A1- 3 238 580
- EP-B1- 3 238 580
- DE-U1-202008 011 482
- FR-A1- 3 072 553
- GB-A- 2 208 131
- US-A- 4 276 990

## Description

La présente invention se rapporte au domaine technique général des appareils de cuisson d'aliments sous pression dans une atmosphère chargée en vapeur, de préférence à usage domestique, et en particulier aux appareils dénommés autocuiseurs qui sont équipés d'un joint d'étanchéité mis en place entre leur cuve et leur couvercle pour assurer, en fonctionnement, l'étanchéité entre l'intérieur et l'extérieur de l'appareil et autoriser ainsi la montée en pression de l'appareil.

La présente invention concerne plus particulièrement un appareil de cuisson d'aliments sous pression comprenant une cuve et un couvercle destiné à former avec ladite cuve une enceinte de cuisson, ledit couvercle comprenant une paroi supérieure présentant un contour périphérique sensiblement circulaire ou ovale à partir duquel s'étend une jupe annulaire, ledit appareil comprenant également un joint d'étanchéité interposé entre le couvercle et la cuve, ainsi qu'un orifice de fuite ménagé à travers le couvercle en regard du joint d'étanchéité.

Il est déjà connu d'avoir recours à des joints d'étanchéité, par exemple en matériaux élastomères, qui sont interposés et compressés entre la cuve et le couvercle des autocuiseurs pour assurer, en particulier grâce à leur souplesse et leur aptitude à la compression, l'étanchéité de l'appareil en fonctionnement. Il est également connu d'utiliser de tels joints en tant que dispositifs de sécurité additionnels autorisant la chute de pression au sein de l'appareil par fuite de vapeur hors de l'enceinte de cuisson. Il s'avère en effet que les dispositifs classiques et spécifiquement dédiés de sécurité équipant habituellement les appareils de cuisson sous pression, comme par exemple les soupapes de sécurité, peuvent être déficients pour de multiples raisons (vieillissement, encrassement, défaut d'entretien suffisant, colmatage, blocage, obstruction par des aliments ou autre dysfonctionnement accidentel...). Dans de telles situations, l'enceinte de cuisson peut être amenée à monter en pression en cours de fonctionnement sans que les dispositifs classiques de sécurité puissent jouer leur rôle en permettant la dépressurisation automatique de l'appareil dès qu'un incident de ce type se produit.

Dans de tels cas, il est alors déjà connu d'utiliser le joint d'étanchéité de l'appareil de cuisson sous pression en tant que moyen de sécurité additionnel en utilisant les propriétés de déformation naturelle du joint sous l'effet de la surpression régnant dans l'enceinte, laquelle surpression va déplacer le joint hors sa position d'étanchéité pour permettre un échappement de vapeur conduisant à la dépressurisation de l'enceinte.

Parmi les appareils de cuisson sous pression qui utilisent un tel mécanisme de fuite de vapeur localisée par déplacement du joint pour assurer une fonction sécuritaire additionnelle, on connait des systèmes mettant en oeuvre une extrusion radiale localisée du joint à travers une fenêtre ménagée dans le bord tombant du couvercle. En cas de surpression anormale, le joint va subir localement un déplacement radial vers l'extérieur à travers la fenêtre, ce qui va entraîner localement une rupture localisée du contact étanche entre le joint et la cuve.

Un tel dispositif de sécurité additionnelle à fenêtre d'extrusion latérale donne globalement satisfaction, puisqu'il permet d'assurer l'évacuation de l'excès de pression, mais présente néanmoins des inconvénients. Ainsi, un premier inconvénient concerne l'absence de maîtrise du déplacement localisé radial centrifuge du joint à travers la fenêtre ménagée dans le bord tombant du couvercle. La résolution de ce problème est particulièrement complexe, dans la mesure où elle dépend en particulier de la géométrie et du positionnement de la fenêtre, eux-mêmes contraints par les exigences de tenue mécanique du couvercle (qui empêchent de dimensionner et positionner de façon totalement libre la fenêtre). Cette difficulté de déplacement du joint à travers la fenêtre est susceptible en pratique d'entraîner un phénomène d'échappement de vapeur violent, susceptible d'éteindre la flamme de la plaque de cuisson (s'il s'agit d'une plaque au gaz par exemple) et/ou de déplacer l'autocuiseur par un effet de réaction, avec tous les risques que cela engendre (fuite de gaz, renversement ou chute de l'autocuiseur... ). On constate en outre que cette conception connue induit une dispersion importante en ce qui concerne la valeur de pression à laquelle la sécurité additionnelle (c'est-à-dire la rupture locale d'étanchéité entre le joint et la cuve) se déclenche. Cette dispersion importante est due en particulier au grand nombre de paramètres qui interviennent, comme en particulier les caractéristiques géométriques des composants et des matériaux à partir desquels sont fabriqués les composants.

Afin d'améliorer les autocuiseurs à fenêtre d'extrusion susvisés, il a été proposé de ménager, en plus de la fenêtre d'extrusion latérale, une ouverture de fuite à travers le panneau supérieur du couvercle, en alignement avec la fenêtre d'extrusion. Selon cette conception améliorée, en cas de surpression le joint s'extrude radialement à travers la fenêtre, vers l'extérieur, ce qui amène sa lèvre supérieure à découvrir l'ouverture de fuite, permettant ainsi une dépressurisation de l'appareil. Une telle conception améliorée permet de remédier au moins en partie à certains des inconvénients précités, en inversant notamment le sens de la fuite qui se produit du bas vers le haut, limitant ainsi les risques d'extinction accidentelle de la flamme de la plaque de cuisson et de déplacement par réaction de l'appareil.

Cette conception améliorée n'est toutefois pas totalement optimale.

En effet, cette conception améliorée conduit, en cas de surpression, à une projection de vapeur relativement violente par l'ouverture de fuite, ce qui entraîne un risque pour l'utilisateur puisque cette projection de vapeur s'effectue vers le haut, dans la direction de l'utilisateur.

En outre, cette conception améliorée nécessite que le joint se déplace de manière relativement importante pour que la fuite de vapeur par l'ouverture de fuite se déclenche, ce qui peut poser des problèmes de fiabilité et de sécurité. Cette conception améliorée à ouverture de fuite ménagée dans le panneau supérieur du couvercle ne permet pas en outre d'éliminer complètement la dispersion en ce qui concerne la valeur de pression à laquelle la sécurité additionnelle se déclenche, même si elle permet de réduire cette dispersion. Le document US 4 276 990 A décrit un appareil de cuisson d'aliments sous pression comprenant une cuve et un couvercle.

Les objets assignés à la présente invention visent par conséquent à remédier aux différents inconvénients énumérés précédemment et à proposer un nouvel appareil de cuisson d'aliments sous pression dont la conception permet, en cas de surpression accidentelle, de provoquer une fuite de vapeur particulièrement douce et progressive, avec néanmoins un débit suffisant pour réduire rapidement la pression interne et sécuriser ainsi l'appareil, avec une dispersion minimisée en ce qui concerne la valeur de pression de déclenchement et sans risque d'extinction de flamme ou de déplacement intempestif de l'appareil.

Un autre objet de l'invention vise à proposer un nouvel appareil de cuisson d'aliments sous pression de conception particulièrement simple, robuste, et facile et rapide à fabriquer de manière industrielle.

Un autre objet de l'invention vise à proposer un nouvel appareil de cuisson d'aliments sous pression qui permet d'obtenir une dépressurisation en cas de surpression accidentelle de façon particulièrement précise et ne nécessitant qu'un déplacement local minime du joint d'étanchéité.

Un autre objet de l'invention vise à proposer un nouvel appareil de cuisson d'aliments sous pression dont la conception permet l'obtention d'un excellent compromis entre la progressivité de la dépressurisation et sa vitesse.

Un autre objet de l'invention vise à proposer un nouvel appareil de cuisson d'aliments sous pression de construction particulièrement compacte et économique.

Un autre objet de l'invention vise à proposer un nouvel appareil de cuisson d'aliments sous pression dont la conception permet de mettre en oeuvre un joint d'étanchéité de forme particulièrement simple.

Un autre objet de l'invention vise à proposer un nouvel appareil de cuisson d'aliments sous pression qui permet d'obtenir, en cas de surpression accidentelle, une chute de pression dont le déclenchement s'effectue de manière particulièrement fiable.

Un autre objet de l'invention vise à proposer un nouvel appareil de cuisson d'aliments sous pression dont la conception garantit le déclenchement de la dépressurisation de l'appareil en cas de surpression accidentelle à un seuil de pression précis.

Un autre objet de l'invention vise à proposer un nouvel appareil de cuisson d'aliments sous pression qui repose sur une conception universelle et bon marché compatible avec tout type de système de verrouillage.

Les objets assignés à l'invention sont atteints à l'aide d'un appareil de cuisson d'aliments sous pression comprenant une cuve et un couvercle destiné à former avec ladite cuve une enceinte de cuisson, ledit couvercle comprenant une paroi supérieure présentant un contour périphérique sensiblement circulaire ou ovale à partir duquel s'étend une jupe annulaire, ledit appareil comprenant également un joint d'étanchéité interposé entre le couvercle et la cuve, ainsi qu'un orifice de fuite ménagé à travers le couvercle en regard du joint d'étanchéité, ledit appareil étant caractérisé en ce que ladite paroi supérieure forme localement une portion enfoncée à travers laquelle est ménagé ledit orifice de fuite, ladite portion enfoncée délimitant une cavité que ledit joint d'étanchéité couvre tant que la pression dans l'enceinte n'excède pas un seuil de sécurité, de façon à ménager localement entre le joint et la portion enfoncée une chambre intermédiaire tout en empêchant l'intérieur de l'enceinte de communiquer avec l'extérieur par l'orifice de fuite, ledit joint d'étanchéité découvrant au moins partiellement ladite cavité dès que la pression dans l'enceinte excède ledit seuil de sécurité, pourfaire ainsi communiquer, par l'orifice de fuite et la chambre intermédiaire, l'intérieur de l'enceinte avec l'extérieur afin de faire chuter la pression dans l'enceinte.

D'autres objets et avantages de l'invention apparaîtront et ressortiront plus en détails à la lecture de la description qui suit, en référence aux dessins annexés, donnés à titre purement illustratif et non limitatif, parmi lesquels :

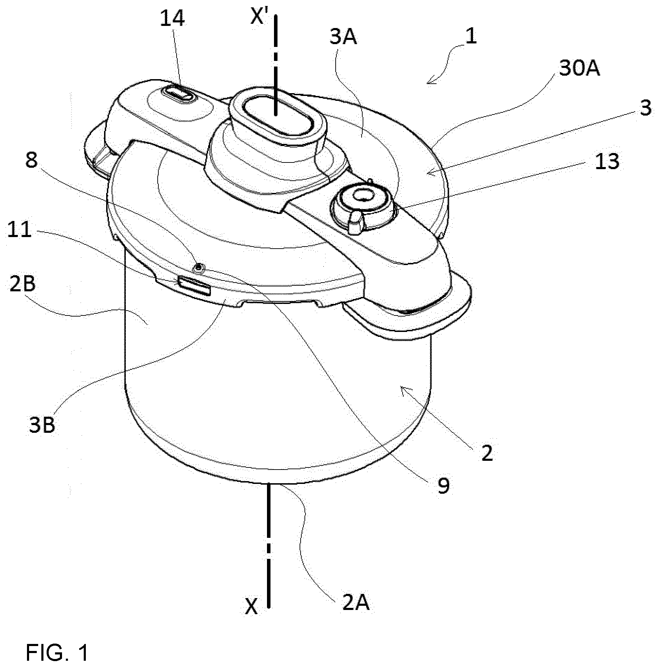

- Figure 1 illustre, selon une vue schématique en perspective, un appareil de cuisson d'aliments sous pression conforme à l'invention.

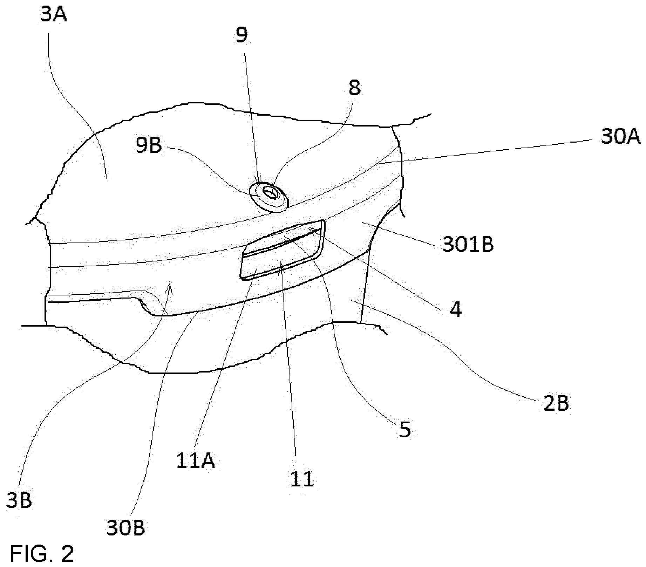

- Figure 2 est une vue agrandie d'un détail de l'appareil de la figure 1.
- Figure 3 illustre un détail de réalisation de l'appareil des figures 1 et 2 selon une vue en coupe, dans une configuration de fonctionnement correspondant à une pression à l'intérieur de l'enceinte de cuisson qui n'excède pas le seuil de sécurité.
- Figure 4 est similaire à la figure 3 mais correspond à une configuration où la pression dans l'enceinte vient d'excéder le seuil de sécurité, entraînant le déclenchement d'une fuite de vapeur pour faire chuter la pression dans l'enceinte.
- Figure 5 est identique à la figure 4 mais correspond à une configuration ultérieure à celle de la figure 4, selon laquelle la dépressurisation se poursuit et s'amplifie par extrusion du joint à travers la fenêtre latérale.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comprend au moins une cuve 2 formant récipient de cuisson, destiné à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. Il est cependant tout à fait envisageable, selon une variante alternative (non illustrée) que la cuve présente non pas un contour circulaire comme illustré aux figures mais un contour ovale, sans pour autant que l'on sorte du cadre de l'invention. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire (mais peut alternativement présenter plutôt une forme ovale), et qui délimite une ouverture d'accès à l'intérieur de la cuve 2. Comme visible sur les figures, le bord supérieur libre 2C de la cuve 2, qui forme la partie terminale de la paroi latérale 2B, s'étend par exemple radialement vers l'extérieur de la cuve 2 pour former au moins une surface annulaire qui définit une zone d'appui contre et sur laquelle vient reposer un joint d'étanchéité 4 décrit plus en détails ci-après.

L'appareil 1 conforme à l'invention comprend également un couvercle 3 destiné à former avec ladite cuve 2 une enceinte de cuisson. Le couvercle 3 est de manière classique fabriqué à partir d'un matériau métallique tel que l'acier inoxydable ou l'aluminium. Il présente avantageusement une forme conjuguée à celle de la cuve 2, afin de pouvoir venir s'emboîter dans ou sur cette dernière, comme illustré aux figures. Le couvercle 3 comprend une paroi supérieure 3A qui forme un élément de couverture dont la forme et les dimensions sont sensiblement conjuguées à celles de l'ouverture d'accès délimité par le bord supérieur libre 2C de la paroi latérale annulaire 2B de la cuve 2. Ladite paroi supérieure 3A présente ainsi un contour périphérique 30A sensiblement circulaire (lorsque le bord supérieur libre 2C présente lui-même un contour sensiblement circulaire) ou ovale (dans le cas d'une cuve 2 dont le bord supérieur libre 2C présente lui-même un contour ovale). Dans le mode de réalisation illustré aux figures, le couvercle 3 comprend également une jupe annulaire 3B qui s'étend à partir dudit contour périphérique 30A de la paroi supérieure 3A. Ladite jupe annulaire 3B présente avantageusement, comme illustré aux figures, une forme sensiblement cylindrique ou tronconique et s'étend entre le contour périphérique 30A de l'élément de couverture formé par la paroi supérieure 3A et un bord circulaire libre 30B. Comme illustré aux figures, l'élément de couverture discoïde formé par la paroi supérieure 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la jupe annulaire 3B forme une ceinture qui s'étend sensiblement verticalement, c'est-à-dire parallèlement à l'axe central X-X'. Cela n'exclut bien entendu aucunement que la paroi supérieure 3A puisse être bombée ou incurvée localement, par exemple pour accueillir un mécanisme de commande. La paroi supérieure 3A présente avantageusement une face inférieure 30, destinée à se trouver du côté de l'intérieur de l'enceinte (et donc de la cuve 2), et une face extérieure 31 opposée, tandis que la jupe annulaire 3B présente elle aussi une face intérieure 300B dirigée vers l'intérieur de l'appareil, c'est-à-dire vers l'axe central X-X', et une face extérieure opposée 301B. La face interne du couvercle 3 est donc dans ce cas formée par la face intérieure 30 de la paroi supérieure 3A et par la face intérieure 300B de la jupe annulaire 3B. Dans le mode de réalisation illustré aux figures, où la jupe annulaire 3B est formée par un bord tombant qui s'étend du haut vers le bas à partir de la périphérie de la paroi supérieure 3A, le couvercle 3 est avantageusement conçu pour coiffer de façon sensiblement ajustée le sommet de la cuve 2, de sorte que la jupe annulaire 3B ceinture par l'extérieur le sommet de la paroi latérale annulaire 2B et le bord supérieur libre 2C, tandis que la paroi supérieure 3A repose en appui sur le bord libre 2C, par l'intermédiaire d'un joint d'étanchéité 4 interposé entre la cuve 2 et le couvercle 3, et qui sera décrit plus en détail ci-après. Il est cependant parfaitement envisageable que la jupe annulaire 3B soit alternativement destinée à être insérée au sein de la cuve 2, de façon à être entouré par, et contenue dans, la cuve 2, sans pour autant que l'on sorte du cadre de l'invention.

Afin d'empêcher la séparation du couvercle 3 de la cuve 2 sous l'effet de la montée en pression, l'appareil de cuisson 1 selon l'invention comprend classiquement un système de verrouillage/déverrouillage du couvercle 3 relativement la cuve 2, permettant à l'utilisateur de verrouiller le couvercle 3 relativement à la cuve 2 pour assurer la cuisson des aliments sous pression à l'intérieur de l'enceinte ou pour déverrouiller l'appareil 1 et avoir ainsi accès à l'intérieur de la cuve 2. Le système de verrouillage/déverrouillage pourra être formé par tout dispositif classique bien connu dans le domaine et être par exemple un système à baïonnette (conformément à l'exemple illustré aux figures) ou un système à mâchoire(s) mobile(s) formé par exemple d'au moins une, et de préférence de deux, mâchoire(s) de verrouillage montée(s) mobile(s) radialement sur le couvercle 3, ou un système à segments mobiles (formé par des pattes radialement mobiles dont l'extrémité est destinée à venir se loger dans une cavité ou un orifice ménagé dans la paroi de la cuve 2), ou tout autre système connu (par exemple à étrier).

L'appareil 1 de cuisson d'aliments sous pression conforme à l'invention comprend avantageusement un moyen de régulation de pression, comme par exemple une soupape 13, montée de préférence sur le couvercle 3, de façon par exemple à être portée directement par ledit couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, de préférence de l'ordre de 100 kPa. L'appareil 1 de cuisson d'aliments sous pression comporte avantageusement d'autres organes de fonctionnement, comme par exemple un moyen de sécurité à l'ouverture 14 (du genre doigt de sécurité sensible à la pression) ainsi qu'une soupape de sécurité à la surpression conçue pour dépressuriser l'appareil 1 dès que la pression régnant dans l'enceinte excède une valeur de sécurité prédéterminée.

Comme évoqué précédemment, l'appareil 1 comprend également un joint d'étanchéité 4 interposé entre le couvercle 3 et la cuve 2 pour permettre la montée en pression de l'enceinte de cuisson. Le joint d'étanchéité 4 permet ainsi d'empêcher tout flux incontrôlé de vapeur et/ou d'air entre l'intérieur de l'enceinte et l'extérieur. À cette fin, le joint d'étanchéité 4 est avantageusement réalisé en un matériau élastomère et présente une souplesse naturelle de manière à pouvoir être comprimé entre le couvercle 3 et la cuve 2 pour réaliser l'étanchéité nécessaire. Le joint d'étanchéité 4 présente avantageusement une forme sensiblement annulaire conjuguée à celle du contour périphérique de la paroi supérieure 3A.

De préférence, le joint d'étanchéité 4 comporte un talon annulaire périphérique 5 qui est avantageusement logé contre la face intérieure 300B de la jupe annulaire 3B. Avantageusement, le talon 5 présente une section transversale (visible aux figures) sensiblement constante sur tout le périmètre du joint d'étanchéité 4. En d'autres termes, la forme de la section transversale ne varie sensiblement pas sur toute la longueur du joint 4, ce qui signifie en particulier que le talon 5 est dépourvu d'irrégularités ou discontinuités géométriques, du genre encoches, qui pourraient localement modifier son comportement mécanique. Cette disposition technique permet de simplifier la fabrication du joint 4. Comme illustré aux figures, le joint d'étanchéité 4 comporte également une première lèvre 6, avantageusement souple et flexible, qui s'étend à partir du talon 5, et plus précisément à partir du côté interne dudit talon 5, vers l'intérieur de l'appareil 1, c'est-à-dire en direction de l'axe vertical central X-X'. Comme illustré, la première lèvre 6 s'étend selon une direction d'extension majoritairement radiale centripète, entre une racine 6A solidaire du talon 5, et une portion extrêmale libre 6B. La première lèvre 6 forme ainsi une jupe souple qui s'étend à partir du talon 5 en direction de l'axe central X-X'. De préférence, la première lèvre 6 vient en appui, au niveau au moins de sa portion extrêmale libre 6B, contre la face intérieure 30 de la paroi supérieure 3A, selon une zone de contact annulaire étanche. De préférence, la première lèvre 6 présente une section transversale (visible aux figures) sensiblement constante sur tout le périmètre du joint d'étanchéité 4. Cela signifie que la première lèvre 6 ne présente pas, elle non plus, d'irrégularités ou discontinuités géométriques (encoche, ouverture...) susceptibles de modifier localement son comportement mécanique. Cette absence de discontinuité est source de simplicité de fabrication et d'utilisation du joint 4, et contribue également à sa fiabilité. Dans le mode de réalisation préférentiel illustré aux figures, le joint d'étanchéité 4 présente avantageusement une forme de révolution autour de l'axe X-X', ce qui le rend particulièrement facile et bon marché à fabriquer.

Avantageusement, le joint d'étanchéité 4 comporte une seconde lèvre 7, qui est de préférence elle aussi souple et flexible, et qui s'étend avantageusement elle aussi à partir du talon 5 vers l'intérieur de l'appareil 1, sous la première lèvre 6. Ladite seconde lèvre 7 est avantageusement destinée à venir en contact étanche avec la cuve 2. Comme illustré aux figures, la seconde lèvre 7 s'étend avantageusement selon une direction d'extension majoritairement radiale centripète, entre une racine 7A solidaire du talon 5 et une extrémité libre 7B, ladite seconde lèvre 7 définissant une surface d'étanchéité qui vient en appui étanche contre la cuve 2, de préférence contre la zone d'appui formé par le bord supérieur 2C, comme illustré aux figures. Avantageusement, ladite seconde lèvre 7 s'étend, à partir du talon 5, selon une incidence oblique vers l'intérieur de l'appareil 1 et vers le bas, de telle sorte que lesdites première et seconde lèvres 6, 7 s'étendent, à partir du talon 5, de façon sensiblement divergente, selon un profil sensiblement en « V ».

Le joint d'étanchéité 4 est avantageusement attaché, de manière amovible, au couvercle 3. Lorsque le couvercle 3 est rapporté sur la cuve 2, le joint d'étanchéité 4 se retrouve interposé entre la zone d'appui formée par le bord supérieur 2C et la face intérieure 30 de la paroi supérieure 3A du couvercle 3. Sous l'effet du poids du couvercle 3, les première et seconde lèvres 6, 7 sont pressées l'une en direction de l'autre ce qui permet ainsi d'assurer une étanchéité entre la cuve 2 le couvercle 3.

Avantageusement, le joint d'étanchéité 4 est symétrique relativement à un plan horizontal médian qui passe entre les première et deuxième lèvres 6, 7. Grâce à cette caractéristique, le joint 4 peut être disposé sans aucune précaution particulière (l'utilisateur n'a pas à se soucier d'un quelconque sens de positionnement du joint 4) entre le couvercle 3 la cuve 2, ce qui facilite l'utilisation de l'appareil 1 et minimise le risque d'erreur d'utilisation ou de défaut de fonctionnement.

L'invention n'est toutefois pas limitée à un joint d'étanchéité présentant deux lèvres, et il est par exemple tout à fait envisageable que le joint d'étanchéité 4 ne comporte qu'une seule première lèvre 6 et que le talon 5 soit configuré pour venir lui-même en appui contre le bord supérieur 2C pour assurer l'étanchéité avec la cuve 2, en lieu et place de la seconde lèvre 7. Le recours à deux lèvres 6, 7 est toutefois préféré car il permet en particulier, comme évoqué précédemment, de réaliser un joint symétrique par rapport à un plan horizontal médian avec tous les avantages qui en découlent.

L'appareil 1 comprend également un orifice de fuite 8 ménagé à travers le couvercle 3 en regard du joint d'étanchéité 4. Plus précisément, l'orifice de fuite 8 est ménagé à travers la paroi supérieure 3A, sur toute l'épaisseur de cette dernière, de façon à ménager un passage entre l'environnement extérieur et l'intérieur de l'enceinte de cuisson formée par l'association de la cuve 2 et du couvercle 3. L'orifice de fuite 8 est avantageusement ménagé au voisinage du contour périphérique 30A, de façon à se trouver ainsi en regard du joint d'étanchéité 4. Comme illustré aux figures, la paroi supérieure 3A forme localement une portion 9 enfoncée à travers laquelle est ménagé ledit orifice de fuite 8. En d'autres termes, la paroi supérieure 3A est localement déformée pour former, du côté de la face intérieure 30, un renfoncement localisé délimité par ladite portion enfoncée 9. Cette dernière est donc directement formée par la paroi supérieure 3A qui est déformée localement et forme ainsi localement une concavité localisée sur la face intérieure 30 d'une part et une convexité conjuguée sur sa face extérieure 31 d'autre part, ladite convexité formant ainsi une protubérance en saillie de la face extérieure 31, comme visible aux figures. La portion enfoncée 9 est par exemple obtenue par une opération de pressage permettant un enfoncement localisé de la paroi supérieure 3A. Ladite partie enfoncée 9 est par exemple réalisée par emboutissage, ce qui permet une fabrication industrielle facile, rapide et particulièrement économique.

Ladite portion enfoncée 9 délimite donc une cavité, laquelle cavité s'ouvre en l'occurrence vers l'intérieur de l'enceinte de cuisson, du côté de la face intérieure 30, et communique avec l'orifice de fuite 8, lequel débouche dans la cavité en question, de sorte que la cavité communique avec l'extérieur via l'orifice de fuite 8.

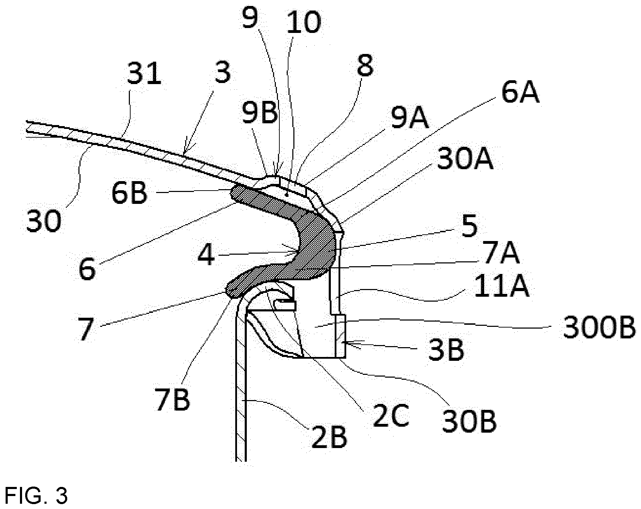

Conformément à l'invention, le joint d'étanchéité 4 couvre la cavité formée par la portion enfoncée 9 tant que la pression dans l'enceinte n'excède pas un seuil de sécurité, de façon à ménager localement entre le joint 4 et la portion enfoncée 9 une chambre intermédiaire 10 tout en empêchant l'intérieur de l'enceinte de communiquer avec l'extérieur par l'orifice de fuite 8. Le seuil de sécurité correspond avantageusement à une valeur de sécurité ultime, supérieure au seuil de déclenchement des autres organes de sécurité (et en particulier de la soupape de sécurité à la surpression). Tant que le seuil de sécurité n'est pas atteint par la pression régnant dans l'enceinte, le joint d'étanchéité 4 couvre la cavité formée par la portion enfoncée 9, c'est-à-dire que le joint d'étanchéité 4 forme une barrière étanche entre l'intérieur de l'enceinte et la cavité en question. Avantageusement, comme cela ressort notamment de la figure 3, la cavité formée par la portion enfoncée 9 débouche du côté de la face intérieure 30 par une ouverture qui est disposée derrière le joint d'étanchéité 4 en appui contre la face intérieure 30, de sorte que le joint d'étanchéité 4 est interposé entre l'intérieur de l'enceinte de cuisson et l'ouverture de la cavité. De préférence, le joint 4, et par exemple sa première lèvre 6, vient en appui contre la face intérieure 30 autour de l'ouverture, de façon à recouvrir et obturer cette dernière. Dans cette configuration, l'enceinte de cuisson peut monter en pression et aucune fuite de vapeur de l'intérieur de l'enceinte vers l'extérieur n'est susceptible de se produire au niveau de l'orifice de fuite 8, qui se trouve à distance du joint 4, séparé de ce dernier par la chambre 10 formée par la cavité précitée. Dès que la pression dans l'enceinte excède le seuil de sécurité, le joint d'étanchéité 4 découvre au moins partiellement ladite cavité, pour faire ainsi communiquer, par l'orifice de fuite 8 et la chambre intermédiaire 10, l'intérieur de l'enceinte avec l'extérieur afin de faire chuter la pression dans l'enceinte. Selon le mode de réalisation illustré aux figures, la première lèvre 6 couvre la cavité tant que la pression dans l'enceinte n'excède pas le seuil de sécurité, empêchant ainsi l'intérieur de l'enceinte de communiquer avec l'extérieur par l'orifice de fuite 8, et la découvre au moins partiellement dès que la pression dans l'enceinte excède le seuil de sécurité pour faire ainsi communiquer, par l'orifice de fuite 8 et la chambre intermédiaire 10, l'intérieur de l'enceinte avec l'extérieur afin de faire chuter la pression dans l'enceinte.

Le seuil de sécurité correspond ainsi à une valeur prédéterminée de pression à partir de laquelle la force motrice exercée par la pression régnant au sein de l'enceinte sur le joint 4, et par exemple sur la portion de la première lèvre 6 fermant la cavité délimitée par la portion enfoncée 9, devient suffisante pour entraîner un déplacement et/ou une déformation locale du premier joint 4, et par exemple de la première lèvre 6, afin de mettre en communication l'intérieur de l'enceinte avec la chambre 10, laquelle chambre 10 débouche elle-même sur extérieur par l'intermédiaire de l'orifice de fuite 8. Il est par exemple envisageable de prévoir que la première lèvre 4 est suffisamment souple et flexible pour se déformer, lorsque la pression dans l'enceinte excède le seuil de sécurité, de manière suffisante pour découvrir la cavité formant la chambre 10. On pourrait également ou alternativement prévoir que le talon 5 soit suffisamment souple et compressible pour venir s'écraser localement contre la jupe annulaire 3B, engendrant ainsi un déplacement radial vers l'extérieur de la première lèvre 6 qui découvre alors la cavité. Dans l'un ou l'autre des cas précités, il est envisageable de pourvoir la première lèvre 6 et/ou le talon 5 de moyens facilitant leur déformation, sous la forme par exemple de restrictions de section et/ou d'encoches.

Toutefois, dans un mode de réalisation préférentiel illustré aux figures, le mécanisme permettant au joint d'étanchéité 4 de découvrir au moins partiellement la cavité formant la chambre intermédiaire 10 dès que la pression dans l'enceinte excède le seuil de sécurité repose sur un déplacement radial localisé du joint 4 à travers une fenêtre d'extrusion. Dans ce cas, la jupe annulaire 3B comporte avantageusement au moins une fenêtre d'extrusion 11 pour permettre audit joint étanchéité 4 de localement s'extruder radialement à travers la fenêtre d'extrusion 11 lorsque la pression régnant dans l'enceinte de cuisson excède le seuil de sécurité prédéterminé. En d'autres termes, la fenêtre d'extrusion 11 constitue un espace de dégagement radial dont est pourvue localement la jupe périphérique annulaire 3B pour permettre au joint d'étanchéité 4 de se déformer localement radialement vers l'extérieur dans l'espace de dégagement en question. Sous l'effet de cette déformation locale, le joint se décale progressivement relativement à la cavité qui est ainsi découverte, ce qui entraîne la chute de la pression dans l'enceinte. De préférence, la fenêtre d'extrusion 11 est formée par un orifice ménagé à travers la jupe annulaire 3B, c'est-à-dire par une ouverture pratiquée à travers l'épaisseur de ladite jupe annulaire 3B, comme illustré. Alternativement, la fenêtre d'extrusion 11 peut être simplement formée par une concavité résultant d'une déformation localisée de la jupe annulaire 3B, ladite concavité formant par exemple un logement creux autorisant localement le déplacement radial du joint 4 vers l'extérieur.

Afin de permettre un déclenchement fiable et précis de la chute de pression en cas de surpression accidentelle, lesdites chambre intermédiaire 10 et fenêtre d'extrusion 11 sont positionnées l'une relativement à l'autre de façon qu'un même plan radial passe à la fois par ladite fenêtre d'extrusion 11 et ladite chambre intermédiaire 10. En d'autres termes, la chambre intermédiaire 10 et la fenêtre d'extrusion 11 sont de préférence alignées radialement relativement à l'axe vertical central X-X'. Tel est le cas également de l'orifice de fuite 8, qui est avantageusement traversé par le même plan radial qui passe à la fois par la fenêtre d'extrusion 11 et la chambre intermédiaire 10.

Le recours à une chambre intermédiaire 10, interposé entre le joint 4 et l'orifice de fuite 8 débouchant sur l'extérieur, s'avère particulièrement avantageux car :
- la chambre 10 permet, en créant un sas intermédiaire, d'atténuer la vitesse du jet de vapeur limitant ainsi le risque d'occurrence d'une fuite de vapeur violente susceptible d'incommoder ou blesser l'utilisateur ;
- la chambre 10 permet également de dissocier le réglage du déclenchement de la fuite de vapeur et celui du débit de fuite ; le déclenchement s'opère en effet par interaction entre le joint 4 et la chambre intermédiaire 10, dont la forme et la section peuvent être adaptées en conséquence, tandis que le débit de fuite est déterminé uniquement par l'orifice de fuite 8. Cela permet de calibrer la section de l'orifice de fuite 8 de manière optimale, afin d'obtenir un effet de décompression rapide et sûr, sans être contraint par la question du déclenchement de la fuite. Cela laisse également le choix d'une forme adaptée pour l'orifice de fuite 8, par exemple une forme de trou circulaire (comme illustré) particulièrement simple et facilement industrialisable, sans nécessité de recourir à une forme spécifique adaptée pour favoriser un déclenchement fiable et précis (par exemple une forme oblongue).

L'invention permet ainsi de combiner :
- un déclenchement rapide, fiable et précoce de la sécurité à la surpression, par la mise en oeuvre d'une chambre 10 de section adaptée pour favoriser une perte de contact étanche sous l'effet d'un déplacement local du joint 4 d'amplitude relativement modeste (pas besoin d'un déplacement localisé important du joint 4 comme dans l'art antérieur) ;
- et d'assurer une fuite avec un débit optimal, c'est-à-dire un débit qui, tout en étant suffisant pour réduire au plus vite la situation de surpression dangereuse, est également limité à un niveau compatible avec la sécurité de l'utilisateur.

Dans ce mode de réalisation particulièrement intéressant, qui tire parti du découplement entre le mécanisme de déclenchement et le réglage du débit de fuite permis par l'invention, la section de l'ouverture par laquelle la cavité débouche du côté de la face intérieure 30 est avantageusement supérieure à la section de l'orifice de fuite 8.

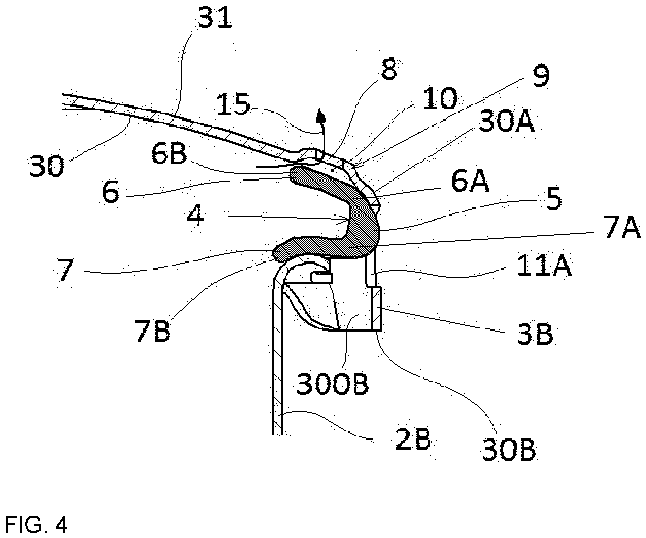

De préférence, ladite portion enfoncée comprend une paroi de sommet 9A et une paroi latérale 9B qui s'étend à partir de ladite paroi de sommet 9A en s'évasant en direction de l'intérieur de l'enceinte. Dans ce cas, l'orifice de fuite 8 est avantageusement ménagé à travers ladite paroi de sommet 9A, comme illustré aux figures. De façon préférentielle, ladite portion enfoncée 9 présente une forme sensiblement tronconique, comme illustré aux figures. Le recours à une forme tronconique est particulièrement avantageux en raison de la simplicité de cette forme, et de sa facilité à l'obtenir par une opération d'emboutissage. Une telle conformation sensiblement tronconique permet ainsi, en réalisant l'orifice de fuite 8 au sommet de la forme tronconique, sur la paroi de sommet 9A (par exemple au centre de cette dernière), de bénéficier à la fois d'un déclenchement précoce qui ne nécessite pas de déplacement radial localisé important du joint 4 (comme illustré à la figure 4, le joint 4 perd en effet rapidement son contact étanche du fait de la taille relativement importante de l'ouverture formant l'entrée de la chambre 10), tout en bénéficiant d'un débit maîtrisé grâce à la taille moindre de l'orifice de fuite 8 ménagé au sommet du troncône, sur la paroi de sommet 9A, laquelle est avantageusement sensiblement plane.

Le fonctionnement de la variante illustrée aux figures va maintenant être décrit. Tout d'abord, les aliments et un liquide de cuisson (eau) sont disposés dans la cuve 2, puis le couvercle 3 est rapporté sur la cuve 2 et est verrouillé à cette dernière, par exemple au moyen d'un système à baïonnette, par coopération deux à deux de rampes de cuve et de rampes de couvercle.

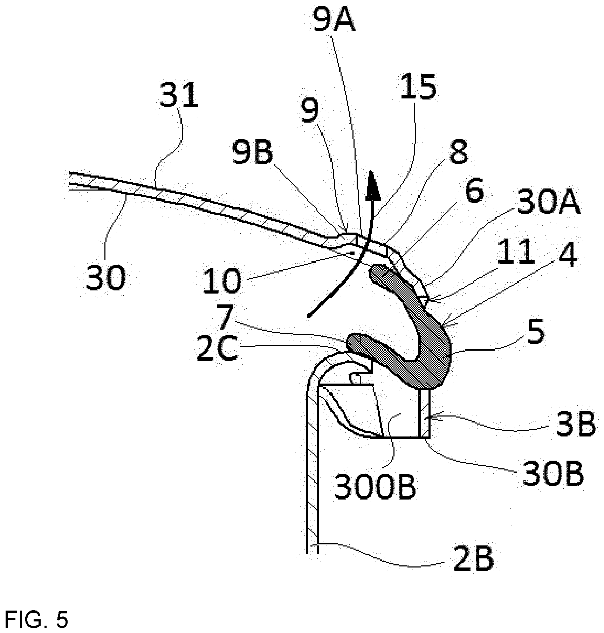

Sous l'effet d'une source de chauffe (par exemple une plaque de cuisson) sur laquelle l'appareil 1 est disposé, l'enceinte de cuisson formée par l'association de la cuve 2 et du couvercle 3 monte en pression progressivement, jusqu'à atteindre un niveau de pression de fonctionnement régulé par une soupape de fonctionnement. Dans l'hypothèse où la soupape de fonctionnement en question est défectueuse et par exemple se bouche, la pression va continuer à monter au sein de l'enceinte de cuisson, pour atteindre une valeur de sécurité qui déclenche normalement l'ouverture d'une soupape de sécurité. Dans l'hypothèse où cette soupape de sécurité est également déficiente (par exemple obturée), la pression continue alors de monter au sein de l'enceinte, puisque le joint 4, qui se trouve dans la configuration illustrée par la figure 3, continue à assurer sa fonction d'étanchéité entre la cuve 2 et le couvercle 3. Lorsque la pression excède le seuil de sécurité, le joint 4 va alors être repoussé localement radialement vers l'extérieur à travers la fenêtre d'extrusion 11. Ce déplacement radial localisé vers l'extérieur du joint 4 va entraîner un glissement localisé de la première lèvre 6 vers l'extérieur, de sorte que la première lèvre 6 va alors découvrir la chambre 10, c'est-à-dire mettre en communication ladite chambre 10 avec l'intérieur de l'enceinte. Ce déclenchement de la fuite de sécurité est facilité par le fait que le joint d'étanchéité 4, et plus précisément sa première lèvre 6, repose localement en porte-à-faux contre la face antérieure 30, en raison de la présence du dégagement formé par la chambre intermédiaire 10. Ce dégagement facilite la perte de contact étanche entre la première lèvre 6 et la face interne 30. Les gaz et vapeurs 15 contenues dans l'enceinte vont alors pouvoir entrer dans la chambre 10, puis s'échapper à l'extérieur en passant par l'orifice de fuite 8 qui assure une mise en communication de la chambre 10 avec l'extérieur. Ce phénomène de fuite va s'accentuer progressivement au fur et à mesure que le joint d'étanchéité 4 continue de découvrir de plus en plus la cavité (figure 5) sous l'effet de la surpression. L'invention permet ainsi un excellent compromis entre la fiabilité, la rapidité et la précision de déclenchement de la sécurité ultime, et la mise en oeuvre d'un débit de fuite contrôlée qui préserve la sécurité de l'utilisateur. Ces avantages remarquables, qui sont d'autant plus marquées lorsqu'est mise en oeuvre une fenêtre d'extrusion 11 (facultatif toutefois), sont obtenus en outre de manière particulièrement simple et bon marché, grâce à la seule réalisation d'une portion enfoncée 9 (obtenue par exemple par emboutissage) dont la paroi est munie d'un orifice de fuite 8.

## Revendications

1. Appareil de cuisson (1) d'aliments sous pression comprenant une cuve (2) et un couvercle (3) destiné à former avec ladite cuve (2) une enceinte de cuisson, ledit couvercle (3) comprenant une paroi supérieure (3A) présentant un contour périphérique (30A) sensiblement circulaire ou ovale à partir duquel s'étend une jupe annulaire (3B), ledit appareil (1) comprenant également un joint d'étanchéité (4) interposé entre le couvercle (3) et la cuve (2), ainsi qu'un orifice de fuite (8) ménagé à travers le couvercle (3) en regard du joint d'étanchéité (4), ledit appareil étant **caractérisé en ce que** ladite paroi supérieure (3A) forme localement une portion enfoncée (9) à travers laquelle est ménagé ledit orifice de fuite (8), ladite portion enfoncée (9) délimitant une cavité que ledit joint d'étanchéité (4) couvre tant que la pression dans l'enceinte n'excède pas un seuil de sécurité, de façon à ménager localement entre le joint (4) et la portion enfoncée (9) une chambre intermédiaire (10) tout en empêchant l'intérieur de l'enceinte de communiquer avec l'extérieur par l'orifice de fuite (8), ledit joint d'étanchéité (4) découvrant au moins partiellement ladite cavité dès que la pression dans l'enceinte excède ledit seuil de sécurité, pour faire ainsi communiquer, par l'orifice de fuite (8) et la chambre intermédiaire (10), l'intérieur de l'enceinte avec l'extérieur afin de faire chuter la pression dans l'enceinte.

2. Appareil de cuisson (1) selon la revendication précédente **caractérisé en ce que** ladite portion enfoncée (9) est réalisée par emboutissage.

3. Appareil de cuisson (1) selon l'une des revendications précédentes **caractérisé en ce que** ladite paroi supérieure (3A) présente une face intérieure (30) destinée à se trouver du côté de l'intérieur de l'enceinte et une face extérieure (31) opposée, ladite cavité débouche du côté de la face intérieure (30) par une ouverture dont la section est supérieure à celle de l'orifice de fuite.

4. Appareil de cuisson (1) selon l'une des revendications précédentes **caractérisé en ce que** ladite portion enfoncée (9) comprend une paroi de sommet (9A) et une paroi latérale (9B) qui s'étend à partir de ladite paroi de sommet (9A) en s'évasant en direction de l'intérieur de l'enceinte.

5. Appareil de cuisson (1) selon la revendication précédente **caractérisé en ce que** ledit orifice de fuite (8) est ménagé à travers ladite paroi de sommet (9A).

6. Appareil de cuisson (1) selon l'une des revendications précédentes **caractérisé en ce que** ladite portion enfoncée (9) présente une forme sensiblement tronconique.

7. Appareil de cuisson (1) selon l'une des revendications précédentes **caractérisé en ce que** ledit orifice de fuite (8) est ménagé au voisinage dudit contour périphérique (30A).

8. Appareil de cuisson (1) selon l'une des revendications précédentes **caractérisé en ce que** ledit joint d'étanchéité (4) comportant un talon annulaire périphérique (5) ainsi qu'au moins une première lèvre (6) qui s'étend à partir dudit talon (5) vers l'intérieur de l'appareil (1), ladite première lèvre (6) couvrant ladite cavité tant que la pression dans l'enceinte n'excède pas le seuil de sécurité, empêchant ainsi l'intérieur de l'enceinte de communiquer avec l'extérieur par l'orifice de fuite (8), et la découvrant au moins partiellement dès que la pression dans l'enceinte excède ledit seuil de sécurité pour faire ainsi communiquer, par l'orifice de fuite (8) et la chambre intermédiaire (10), l'intérieur de l'enceinte avec l'extérieur afin de faire chuter la pression dans l'enceinte.

9. Appareil de cuisson (1) selon la revendication précédente **caractérisé en ce que** ledit joint d'étanchéité (4) comporte une seconde lèvre (7) s'étendant également à partir du talon (5) vers l'intérieur de l'appareil (1), ladite seconde lèvre (7) étant destinée à venir en contact étanche avec la cuve (2).

10. Appareil de cuisson (1) selon l'une des revendications précédentes **caractérisé en ce que** ladite jupe annulaire (3B) comporte au moins une fenêtre d'extrusion (11) pour permettre audit joint d'étanchéité (4) de localement s'extruder radialement à travers ladite fenêtre d'extrusion (11) lorsque la pression régnant dans l'enceinte de cuisson excède le seuil de sécurité prédéterminé.

11. Appareil de cuisson (1) selon la revendication précédente **caractérisé en ce que** ladite fenêtre d'extrusion (11) est formée par un orifice (11A) ménagé à travers ladite jupe annulaire ou par une concavité résultant d'une déformation localisée de ladite jupe annulaire (3B).

12. Appareil de cuisson (1) selon la revendication 10 ou 11 **caractérisé en ce que** lesdites chambre intermédiaire (10) et fenêtre d'extrusion (11) sont positionnées l'une relativement à l'autre de façon qu'un même plan radial passe à la fois par ladite fenêtre d'extrusion (11) et ladite chambre intermédiaire (10).

## Patentansprüche

1. Gerät (1) zum Kochen von Nahrungsmitteln unter Druck mit einem Behälter (2) und einem Deckel (3), der dazu bestimmt ist, mit dem Behälter (2) einen Kochraum zu bilden, wobei der Deckel (3) eine obere Wand (3A) mit einer im Wesentlichen kreisförmigen oder ovalen Umfangskontur (30A) aufweist, von der aus sich eine ringförmige Schürze (3B) erstreckt, wobei das Gerät (1) auch eine Dichtung (4), die zwischen dem Deckel (3) und dem Behälter (2) eingefügt ist, sowie eine Leckageöffnung (8) umfasst, die durch den Deckel (3) gegenüber der Dichtung (4) ausgespart ist, wobei das Gerät **dadurch gekennzeichnet ist, dass** die obere Wand (3A) lokal einen vertieften Abschnitt (9) bildet, durch den die Leckageöffnung (8) ausgespart ist, der vertiefte Abschnitt (9) eine Kavität begrenzt, den die Dichtung (4) abdeckt, solange der Druck in dem Raum einen Sicherheitsschwellenwert nicht überschreitet, so dass lokal zwischen der Dichtung (4) und dem vertieften Abschnitt (9) eine Zwischenkammer (10) gebildet wird, wobei gleichzeitig verhindert wird, dass das Innere des Raums über die Leckageöffnung (8) mit der Umgebung in Verbindung steht, wobei die Dichtung (4) die Kavität zumindest teilweise freilegt, sobald der Druck in dem Raum den Sicherheitsschwellenwert überschreitet, um so über die Leckageöffnung (8) und die Zwischenkammer (10) das Innere des Raums mit der Umgebung zu verbinden, um den Druck in dem Raum zu senken.

2. Kochgerät (1) nach dem vorhergehenden Anspruch, **dadurch gekennzeichnet, dass** der vertiefte Abschnitt (9) durch Tiefziehen hergestellt ist.

3. Kochgerät (1) nach einem der vorhergehenden Ansprüche, **dadurch gekennzeichnet, dass** die obere Wand (3A) eine Innenseite (30), die dazu bestimmt ist, sich auf der Seite des Inneren des Raums zu befinden, und eine gegenüberliegende Außenseite (31) aufweist, wobei die Kavität auf der Seite der Innenseite (30) in eine Öffnung mündet, deren Querschnitt größer ist als der der Leckageöffnung.

4. Kochgerät (1) nach einem der vorhergehenden Ansprüche, **dadurch gekennzeichnet, dass** der vertiefte Abschnitt (9) eine Scheitelwand (9A) und eine Seitenwand (9B) umfasst, die sich von der Scheitelwand (9A) aus in Richtung des Inneren des Raums aufweitend erstreckt.

5. Kochgerät (1) nach dem vorhergehenden Anspruch, **dadurch gekennzeichnet, dass** die Leckageöffnung (8) durch die Scheitelwand (9A) hindurch ausgebildet ist.

6. Kochgerät (1) nach einem der vorhergehenden Ansprüche, **dadurch gekennzeichnet, dass** der vertiefte Abschnitt (9) eine im Wesentlichen kegelstumpfförmige Form aufweist.

7. Kochgerät (1) nach einem der vorhergehenden Ansprüche, **dadurch gekennzeichnet, dass** die Leckageöffnung (8) in der Nähe der Umfangskontur (30A) ausgebildet ist.

8. Kochgerät (1) nach einem der vorhergehenden Ansprüche, **dadurch gekennzeichnet, dass** die Dichtung (4) einen ringförmigen Umfangsabsatz (5) sowie mindestens eine erste Lippe (6) umfasst, die sich von dem Absatz (5) aus in das Innere des Geräts (1) erstreckt, wobei die erste Lippe (6) die Kavität abdeckt, solange der Druck in dem Raum nicht den Sicherheitsschwellenwert überschreitet, und verhindert so, dass das Innere des Raums über die Leckageöffnung (8) mit der Umgebung in Verbindung steht, und deckt sie zumindest teilweise ab, sobald der Druck in dem Raum den Sicherheitsschwellenwert überschreitet, um so über die Leckageöffnung (8) und die Zwischenkammer (10) das Innere des Raums mit der Umgebung in Verbindung zu bringen, um den Druck in dem Raum abfallen zu lassen.

9. Kochgerät (1) nach dem vorhergehenden Anspruch, **dadurch gekennzeichnet, dass** die Dichtung (4) eine zweite Lippe (7) aufweist, die sich ebenfalls vom Absatz (5) zum Inneren des Geräts (1) erstreckt, wobei die zweite Lippe (7) dazu bestimmt ist, in dichten Kontakt mit dem Behälter (2) zu kommen.

10. Kochgerät (1) nach einem der vorhergehenden Ansprüche, **dadurch gekennzeichnet, dass** die ringförmige Schürze (3B) mindestens ein Extrusionsfenster (11) aufweist, um der Dichtung (4) zu ermöglichen, lokal radial durch das Extrusionsfenster (11) zu extrudieren, wenn der in dem Kochraum herrschende Druck den vorbestimmten Sicherheitsschwellenwert überschreitet.

11. Kochgerät (1) nach dem vorhergehenden Anspruch, **dadurch gekennzeichnet, dass** das Extrusionsfenster (11) durch eine Öffnung (11A), die durch die ringförmige Schürze hindurch ausgebildet ist, oder durch eine Konkavität, die aus einer lokalisierten Verformung der ringförmigen Schürze (3B) resultiert, gebildet wird.

12. Kochgerät (1) nach Anspruch 10 oder 11, **dadurch gekennzeichnet, dass** die Zwischenkammer (10) und das Extrusionsfenster (11) relativ zueinander so positioniert sind, dass eine gleiche Radialebene sowohl durch das Extrusionsfenster (11) als auch durch die Zwischenkammer (10) verläuft.

## Claims

1. Appliance (1) for cooking food under pressure, comprising a vessel (2) and a lid (3) intended to form with said vessel (2) a cooking enclosure, said lid (3) comprising a top wall (3A) having a substantially circular or oval peripheral contour (30A) from which an annular skirt (3B) extends, said appliance (1) also comprising a seal (4) interposed between the lid (3) and the vessel (2), as well as a leakage orifice (8) formed through the lid (3) facing the seal (4), said appliance being **characterised in that** said top wall (3A) locally forms a indented portion (9) through which said leakage orifice (8) is formed, said indented portion (9) delimiting a cavity that said seal (4) covers as long as the pressure in the chamber does not exceed a safety threshold, so as to form locally between the seal (4) and the indented portion (9) an intermediate chamber (10) while preventing the inside of the enclosure from communicating with the outside through the leakage orifice (8), said seal (4) at least partially uncovering said cavity as soon as the pressure in the enclosure exceeds said safety threshold, thus to make the inside of the enclosure communicate, through the leakage orifice (8) and the intermediate chamber (10), with the outside in order to cause the pressure in the enclosure to drop.

2. Cooking appliance (1) according to the preceding claim, **characterised in that** said indented portion (9) is produced by stamping.

3. Cooking appliance (1) according to one of the preceding claims, **characterised in that** said top wall (3A) has an interior face (30) intended to be located on the inside of the enclosure and an opposite external face (31), said cavity emerges on the interior face (30) through an opening, the cross section of which is larger than that of the leakage orifice.

4. Cooking appliance (1) according to one of the preceding claims, **characterised in that** said indented portion (9) comprises a top wall (9A) and a side wall (9B) that extends from said top wall (9A) while widening out in the direction of the inside of the enclosure.

5. Cooking appliance (1) according to the preceding claim, **characterised in that** said leakage orifice (8) is formed through said top wall (9A).

6. Cooking appliance (1) according to one of the preceding claims, **characterised in that** said indented portion (9) has a substantially frustoconical shape.

7. Cooking appliance (1) according to one of the preceding claims, **characterised in that** said leakage orifice (8) is formed in the vicinity of said peripheral contour (30A).

8. Cooking appliance (1) according to one of the preceding claims, **characterised in that** said seal (4) comprising a peripheral annular heel (5) as well as at least one first lip (6) that extends from said heel (5) towards the inside of the appliance (1), said first lip (6) covering said cavity as long as the pressure in the enclosure does not exceed the safety threshold, thus preventing the inside of the enclosure from communicating with the outside through the leakage orifice (8), and at least partially uncovering it as soon as the pressure in the enclosure exceeds said safety threshold in order thus to make the inside of the enclosure communicate, through the leakage orifice (8) and the intermediate chamber (10), with the outside in order to cause the pressure in the enclosure to drop.

9. Cooking appliance (1) according to the preceding claim, **characterised in that** said seal (4) comprises a second lip (7) also extending from the heel (5) towards the inside of the appliance (1), said second lip (7) being intended to come into sealed contact with the vessel (2).

10. Cooking appliance (1) according to one of the preceding claims, **characterised in that** said annular skirt (3B) comprises at least one extrusion window (11) for enabling said seal (4) to be locally extruded radially through said extrusion window (11) when the pressure prevailing in the cooking enclosure exceeds the predetermined safety threshold.

11. Cooking appliance (1) according to the preceding claim, **characterised in that** said extrusion window (11) is formed by an orifice (11A) formed through said annular skirt or by a concavity resulting from a localised deformation of said annular skirt (3B).

12. Cooking appliance (1) according to claim 10 or 11, **characterised in that** said intermediate chamber (10) and extrusion window (11) are positioned relatively to each other so that the same radial plane passes through both said extrusion window (11) and said intermediate chamber (10).
